# EUROPÄISCHE PATENTANMELDUNG

(11) **EP 3 659 979 A1**
(43) Veröffentlichungstag der Anmeldung: **03.06.2020**
(21) Anmeldenummer: 18208446.7
(22) Anmeldetag: 27.11.2018
(51) Int. Cl.: C02F 1/34, B01F 5/00, B01F 13/10, B01F 5/02, B01F 5/06

(54) **EINRICHTUNG ZUM BEHANDELN VON FLÜSSIGKEITEN MITTELS HYDROMECHANISCHER KAVITATION UND UNTERDRUCK**

(71) Anmelder: Steinhardt GmbH, 65232 Taunusstein (DE)
(72) Erfinder: DILLITZER, Jürgen, 86153 Augsburg (DE)
(74) Vertreter: Quermann, Helmut

(57) **Zusammenfassung**

Die Erfindung betrifft eine Einrichtung (1) zum Behandeln von Flüssigkeiten mittels hydromechanischer Kavitation und Unterdruck, wobei die Einrichtung (1) eine Wirbelkammer (2) zum rotierenden Durchleiten der in einem Zulauf der Wirbelkammer (2) unter Druck stehenden Flüssigkeit und einen sich in Durchströmungsrichtung (5) der Flüssigkeit an die Wirbelkammer (2) anschließenden, einen Durchtrittskanal (3) aufweisenden Strömungskörper (4) zur Erzeugung von Kavitation und Unterdruck aufweist, wobei der Strömungskörper (4) einen sich in der Durchströmungsrichtung (5) der Flüssigkeit durch den Strömungskörper (4) im Querschnitt verjüngenden Abschnitt (6) und einen sich an diesen Abschnitt (6) anschließenden, im Querschnitt erweiternden Abschnitt (7) aufweist.

Bei einer solchen Einrichtung ist vorgesehen, dass die Wirbelkammer (2) im Inneren einen Reaktorraum (10) zur Aufnahme der rotierenden Flüssigkeit aufweist, sowie mit der Wirbelkammer (2) der Strömungskörper (4) verbunden ist, der innerhalb der Wirbelkammer (2) angeordnet und von dem Reaktorraum (10) umschlossen ist, wobei die Wirbelkammer (2) eine Zulauföffnung (9) zum Zuführen der Flüssigkeit in den Reaktorraum (10) und der Strömungskörper (4) innerhalb der Wirbelkammer (2) eine Einlassöffnung (11) aufweist, zum Durchleiten der rotierenden Flüssigkeit von dem Reaktorraum (10) durch diese Einlassöffnung (11) in den Durchtrittskanal (3) des Strömungskörpers (4) und aus der Wirbelkammer (2) heraus.

## Beschreibung

Die Erfindung betrifft eine Einrichtung zum Behandeln von Flüssigkeiten mittels hydromechanischer Kavitation und Unterdruck, wobei die Einrichtung eine Wirbelkammer zum rotierenden Durchleiten der in einem Zulauf der Wirbelkammer unter Druck stehenden Flüssigkeit und einen sich in Durchströmungsrichtung der Flüssigkeit an die Wirbelkammer anschließenden, einen Durchtrittskanal aufweisenden Strömungskörper zur Erzeugung von Kavitation und Unterdruck aufweist, wobei der Strömungskörper einen sich in der Durchströmungsrichtung der Flüssigkeit durch den Strömungskörper im Querschnitt verjüngten Abschnitt und einen sich an diesen Abschnitt anschließenden, im Querschnitt erweiternden Abschnitt aufweist.

Eine solche Einrichtung dient beispielsweise dem Zweck, vorhandenes Wasser so zu behandeln, dass es nahezu keimfrei ist und Trinkwasserqualität erreicht. In die Wirbelkammer, ähnlich einer Zentrifuge, wird mittels einer vorgeschalteten Hochdruckpumpe Wasser mit einem definierten Vordruck gepumpt. Dieser Vordruck beträgt insbesondere 4.0 bar bis 5.0 bar, kann aber auch deutlich höher sein. Innerhalb der Wirbelkammer werden, konstruktionsbedingt, hohe Rotationsgeschwindigkeiten, insbesondere größer 30 m/s, ferner Kavitation und Unterdruck erzeugt. In dem sich unmittelbar an die Wirbelkammer anschließenden Strömungskörper erfolgt zudem eine gezielte Entspannung des rotierenden Wassers. Es entsteht ein Unterdruck von ca. -1.0 bar. Kavitation und Unterdruck zerstören mechanisch jegliche Mikrobiologie und alle Legionellen-Bakterien und bauen vorhandene Biofilm-Beläge in den wasserführenden Anlagenteilen verlässlich ab. Zudem entstehen beim Kavitationsprozess sogenannte Hydroxyl-Radikale, welche die Mikrobiologie zusätzlich auf natürliche Weise rückstandsfrei oxidieren.

Mittels einer solchen Einrichtung ist es auch möglich, die Oberflächenspannung und die Viskosität bei Wasser und allen wässrigen Fluiden, so zum Beispiel bei Wasser, Prozesswasser, Waschlaugen, Reinigungslaugen und allen Flüssigkeiten und flüssigen Mischungen, welche einen überwiegenden Wasseranteil aufweisen, zu reduzieren.

Mittels einer solchen Einrichtung ist es auch möglich, Kühlschmieremulsionen, die im Bearbeitungsmaschinen (Zerspannen/Fräsen/Schneiden/Bohren/Drehen/ Schleifen von Metallen) der zerspanenden Metall verarbeitenden und/oder Metall bearbeitenden Industrie eingesetzt werden, dahingehend zu behandeln und zu pflegen, dass Mikrobiologie (Bakterien, Pilze, Hefen, Viren) zerstört wird, Fremdölanteile abgebaut werden, Schmutzaustrag erhöht wird, die Bearbeitungsqualität der Emulsion verbessert wird und die Standzeit der Emulsion verlängert wird.

Eine Einrichtung der eingangs genannten Art, die die Merkmale des Oberbegriff des Patentanspruchs 1 aufweist, ist aus der DE 20 2017 003 049 U1 bekannt.

Einrichtungen, die dem Zweck dienen, vorhandenes Wasser zu behandeln oder die Oberflächenspannung und die Viskosität bei Wasser und allen wässrigen Gebieten zu reduzieren oder Kühlschmieremulsionen zu behandeln und zu pflegen sind aus der DE 20 2018 002 663 U1,der DE 20 2018 002 660 U1 und der DE 20 2018 002 661 U1 bekannt.

In der DE 102 58 898 A1 ist ein Verfahren und eine Vorrichtung zur Aktivierung von Mikroorganismen unter Verwendung eines Kavitationsgenerators beschrieben. Hierbei wird ein hohes Kavitationsenergiepotenzial in die Flüssigkeit eingetragen und es erfolgt eine Behandlung der Flüssigkeit mittels systemeigener Ultraschallschwingungen. Der Kavitationsgenerator ist nach dem Rotor-Stator-Prinzip aufgebaut und ist an sich gegenüberliegenden Arbeitsflächen des Rotors und des Stadttors mit unterschiedlichen Profilierungen, Abrisskanten sowie Längsnuten ausgestaltet. Die Anzahl, die Form und die Tiefe der Nuten in den Arbeitsflächen des Rotors und des Stators sind so gewählt, dass Druckimpulse mit einer Schwingfrequenz im Bereich von 1-100 kHz entstehen.

In der DE 10 2009 034 977 A1 ist ein Kavitationsreaktor sowie ein Verfahren zur hydrodynamischen Erzeugung homogener, oszillierenden Kavitationsblasen in einem Fluid beschrieben. Hierbei findet eine quer zur Strömungsrichtung angeordnete Blende mit einer Vielzahl von zur Erzeugung von Kavitationsblasen ausgebildeten Mikrodurchlässen Verwendung. Das Fluid wird geradlinig, nicht umgelenkt durch den Kavitationsreaktor geleitet.

In der EP 3 085 670 A1 ist eine Einrichtung zum Behandeln von Wasser mittels hydrodynamischer Kavitation und Ultraschallwellen beschrieben. Diese Einrichtung weist eine Blendenanordnung auf. Das Wasser wird geradlinig, nicht umgelenkt durch die Einrichtung geleitet.

Aufgabe der vorliegenden Erfindung ist es, eine kompakt bauende, effizient wirksame Einrichtung zum Behandeln von Flüssigkeiten mittels hydromechanischer Kavitation und Unterdruck zu schaffen.

Gelöst wird diese Aufgabe durch eine Einrichtung, die gemäß den Merkmalen des Patentanspruchs 1 ausgebildet ist. Weiterbildungen der Erfindung sind Gegenstand der Unteransprüche.

Die Einrichtung dient somit zum Behandeln von Flüssigkeiten mittels hydromechanischer Kavitation und Unterdruck. Sie weist eine Wirbelkammer zum rotierenden Durchleiten der in einem Zulauf der Wirbelkammer unter Druck stehenden Flüssigkeit und einen sich in Durchströmungsrichtung der Flüssigkeit an die Wirbelkammer anschließenden, einen Durchtrittskanal aufweisenden Strömungskörper zur Erzeugung von Kavitation und Unterdruck auf. Der Strömungskörper weist einen sich in der Durchströmungsrichtung der Flüssigkeit durch den Strömungskörper im Querschnitt verjüngenden Abschnitt und einen sich an diesen Abschnitt anschließenden, im Querschnitt erweiternden Abschnitt auf.

Die Wirbelkammer weist im Inneren einen Reaktorraum zur Aufnahme der rotierenden Flüssigkeit auf und es ist mit der Wirbelkammer der Strömungskörper verbunden. Wesentlich ist, dass der Strömungskörper innerhalb der Wirbelkammer angeordnet und von dem Reaktorraum umschlossen ist. Die Wirbelkammer weist eine Zulauföffnung zum Zuführen der Flüssigkeit in den Reaktorraum und der Strömungskörper innerhalb der Wirbelkammer eine Einlassöffnung auf, zum Durchleiten der rotierenden Flüssigkeit von dem Reaktorraum durch diese Einlassöffnung in den Durchtrittskanal des Strömungskörpers und aus der Wirbelkammer heraus.

Aufgrund der Anordnung des Strömungskörpers in der Wirbelkammer kann die Wirbelkammer und damit die Einrichtung kompakt gebaut werden, insbesondere in Längserstreckung der Wirbelkammer und Längserstreckung des Strömungskörpers. Insbesondere wird die in den Reaktorraum gelangende Flüssigkeit beim Übergang in den Strömungskörper umgelenkt.

Es wird als besonders bevorzugt angesehen, wenn der Reaktorraum rotationssymmetrisch ausgebildet ist. Hierdurch kann sich ein optimal rotierender Strom der Flüssigkeit im Reaktorraum ausbilden, mit Rotierung um eine Achse und fortschreitender Förderung der Flüssigkeit in einer Erstreckungsrichtung dieser Achse zum Strömungskörper hin. Dort, im relativ im Querschnitt verjüngten Bereich des Reaktorraums wird die Flüssigkeit in den Strömungskörper umgelenkt und in entgegengesetzter Richtung zur Zuführrichtung der Flüssigkeit im Reaktorraum weitergeleitet, aus der Wirbelkammer heraus.

Es wird als vorteilhaft angesehen, wenn die Zulauföffnung zur Wirbelkammer und eine Auslassöffnung des Strömungskörpers auf derselben Seite der Wirbelkammer oder auf einander angrenzenden Seiten der Wirbelkammer angeordnet sind. Ist die Zulauföffnung zur Wirbelkammer und die Auslassöffnung des Strömungskörpers auf derselben Seite der Wirbelkammer angeordnet, kann die Wirbelkammer radial recht kompakt gestaltet werden. Ist die Zulauföffnung zur Wirbelkammer und die Auslassöffnung des Strömungskörpers auf einander angrenzenden Seiten der Wirbelkammer angeordnet, kann über die Zulauföffnung die Flüssigkeit bereits mit einer hohen Rotationskomponente in den Reaktorraum eingegeben werden. Vorzugsweise weist die Wirbelkammer ein oder mehrere Zulauföffnungen auf und es sind eine oder mehrere Strömungskörper innerhalb des Reaktorraums angeordnet. Insbesondere weist die Wirbelkammer zwei Zulauföffnungen auf, um so an unterschiedlichen Stellen Flüssigkeit mit tangentialer Komponente in den Reaktorraum einleiten zu können, ferner nur einen Strömungskörper auf, durch den die Flüssigkeit aus der Wirbelkammer abgeleitet wird. Es können aber auch mehrere Strömungskörper innerhalb des Reaktorraums angeordnet sein, dann, wenn ein relativ großer Flüssigkeitsstrom durch den Reaktorraum geleitet werden soll und zur Erzielung besonders guter Ergebnisse unter dem Aspekt hydromechanischer Kavitation und Unterdruck mehrere Strömungskörper vorzusehen sind.

Vorzugsweise verjüngt sich der Reaktorraum von der Zulauföffnung zur Einlauföffnung des Strömungskörpers im Querschnitt, insbesondere verjüngt er sich im Querschnitt stetig, bezogen auf eine Ebene des Querschnitts senkrecht zu einer zentralen Achse des Reaktorraums und/oder einer zentrale Achse des Strömungskörpers. Hierdurch ist besonders gut gewährleistet, dass die Drehgeschwindigkeit der Flüssigkeit mit fortschreitender Durchleitung durch den Reaktorraum zunimmt.

Vorzugsweise weist die Wirbelkammer einen Einlassstutzen oder Einlasskanal mit der Zulauföffnung auf, wobei der Einlassstutzen oder Einlasskanal bezüglich des Reaktorraums außermittig und schräg angeordnet ist, zum unmittelbaren tangentialen Einleiten der Flüssigkeit in den Reaktorraum. Unter diesem Aspekt sieht eine bevorzugte Weiterbildung vor, dass die Wirbelkammer mehrere um identische Teilkreiswinkel zueinander versetzt und identisch schräg angeordnete Einlassstutzen oder Einlasskanäle aufweist.

Über die Zulauföffnung bzw. die Zulauföffnungen zur Wirbelkammer gelangt die Flüssigkeit somit insbesondere tangential in den Reaktorraum der Wirbelkammer, sodass bereits beim Einleiten der Flüssigkeit in den Reaktorraum, unabhängig von der Gestaltung des Reaktorraums, eine Rotation der Flüssigkeit im Reaktorraum vorliegt. Insbesondere durch eine trichterförmige Gestaltung des Reaktorraums, der sich zum Strömungskörper hin verjüngt, erfolgt die intensive Rotation der Flüssigkeit im Reaktorraum. Die Flüssigkeit bzw. der Volumenstrom rotiert vom Eingang des Reaktorraums zum Ausgang des Reaktorraums, aufgrund der kegelförmigen Innenkontur des Reaktorraums im Ausgangsbereich des Reaktorraums mit einer sehr hohen Rotationsgeschwindigkeit aufgrund des Zyklon-Prinzips. Die Rotationsgeschwindigkeit der Flüssigkeit im Ausgang des Reaktorraums zum Strömungskörper kann dabei durchaus 30 m/s betragen. Die rotierende Flüssigkeit gelangt vom Ausgang des Reaktorraums unmittelbar in den Strömungskörper. Hierbei wird die rotierende Flüssigkeit im Verbindungsbereich von Reaktorraum und Strömungskörper umgelenkt, sodass die Flüssigkeit aus dem Strömungskörper auf derselben Seite der Wirbelkammer austritt wie die in die Wirbelkammer eintretende Flüssigkeit oder aber die Flüssigkeit aus dem Strömungskörper im Bereich einer Seite der Einrichtung austritt, die einer Seite der Wirbelkammer benachbart ist, in die die Flüssigkeit eintritt.

Vorteilhaft ist die Wirbelkammer im Bereich des die Einlassöffnung aufweisenden Endes des Strömungskörpers mit einem Vorsprung zum Umleiten der im Reaktorraum rotierenden Flüssigkeit in den Strömungskörper versehen, insbesondere mit einem rotationssymmetrisch ausgebildeten Vorsprung versehen. Dieser Vorsprung ragt vorzugsweise in den Strömungskörper in diesem Endbereich des Strömungskörpers, bei Ausbildung einer Ringöffnung zwischen dem Vorsprung und dem Strömungskörper, insbesondere zwischen dem Vorsprung und dem sich im Querschnitt verjüngenden Abschnitt des Strömungskörpers. Mittels des Vorsprungs kann somit die Flüssigkeit definiert vom Reaktorraum in den Strömungskörper umgeleitet werden, im Wesentlichen in entgegengesetzter Richtung zur axialen Durchströmrichtung der Flüssigkeit durch den Reaktorraum. Ragt der Vorsprung in den Strömungskörper, wird die rotierende Flüssigkeit geführt in den Strömungskörper geleitet und dort optimal mittels hydromechanischer Kavitation und Unterdruck behandelt.

Vorzugsweise ist ein Luftkanal vorgesehen, der die Wirbelkammer und den Vorsprung durchsetzt, wobei der Luftkanal in den Reaktorraum oder den Durchtrittskanal des Strömungskörpers mündet. Es wird vorzugsweise an der Stelle der Einrichtung, an der Unterdruck entsteht, über den Luftkanal Luft zwangsweise angesaugt. Die angesaugte Luft wird unmittelbar der Flüssigkeit zugeführt. Flüssigkeit und Luft werden stark vermischt und die Flüssigkeit mit Luftsauerstoff angereichert. Der natürliche Luftsauerstoff, in Verbindung mit dem in der Flüssigkeit gelösten Sauerstoff, steht für eine Redoxreaktion, das heißt Kalt-Oxidation zur Verfügung. Es erfolgt die Kalt-Oxidation der nun vorliegenden Zell-Fragmente und es entstehen beim Kavitationsprozess hochwirksame Hydroxyl-Radikale, die ebenfalls als Oxidationskomponenten zur Verfügung stehen.

Es ist insbesondere vorgesehen, dass die Einlassöffnung des Strömungskörpers in einem im Querschnitt reduzierten Bereich des Reaktorraums angeordnet ist. Aufgrund dieser Anordnung befindet sich die Einlassöffnung in einem Bereich des Reaktorraums, in dem die Flüssigkeit mit einer besonders hohen Rotationsgeschwindigkeit, insbesondere einer Rotationsgeschwindigkeit größer 30 m/s rotiert. Somit werden innerhalb des Reaktors, konstruktiv bedingt, die hohe Rotationsgeschwindigkeit, Kavitation und Unterdruck erzeugt. Innerhalb der Wirbelkammer, dort innerhalb des Strömungskörpers, wird zudem die gezielte Entspannung der Flüssigkeit herbeigeführt. Es entsteht Unterdruck von ca. -1.2 bar.

Die Flüssigkeit wird in den Reaktorraum bei einem Druck von 4.0 bis 5.0 bar oder höher über die Zulauföffnung eingeleitet.

Vorzugsweise ist die Einlassöffnung des Strömungskörpers derart positioniert, dass sie senkrecht zu einer zentralen Achse des Reaktorraums und/oder einer Rotationsachse der Flüssigkeit im Reaktorraum und/oder einer zentralen Achse des Strömungskörpers und/oder einer zentralen Achse des Vorsprungs angeordnet ist.

All diese einzelnen bzw. kommutativen Gestaltungen ermöglichen nicht nur eine besonders einfache, im Wesentlichen rotationssymmetrische Gestaltung der betroffenen Komponenten, sondern auch eine optimale Durchströmung von Wirbelkammer und Strömungskörper.

Als besonders vorteilhaft wird es angesehen, wenn eine zentrale Achse des Reaktorraums und/oder eine Rotationsachse der Flüssigkeit im Reaktorraum und/oder eine zentrale Achse des Strömungskörpers und/oder eine zentrale Achse des Vorsprungs identisch sind.

Gemäß einer bevorzugten Weiterbildung der Erfindung ist vorgesehen, dass der Strömungskörper in dessen Achsrichtung bezüglich der Wirbelkammer und/oder der Vorsprung in dessen Achsrichtung bezüglich der Wirbelkammer verstellbar ist. Diese Verstellbarkeit ermöglicht, die Einrichtung bezüglich Kavitation und Unterdruck zu optimieren, aufgrund der Möglichkeit, die Position des Strömungskörpers im Reaktorraum zu ändern, ferner die Ausbildung des Reaktorraums im Bereich des Vorsprungs zu ändern, ferner den Abstand von Strömungskörper und Vorsprung zu ändern. Durch jede einzelne Maßnahme bzw. die Gesamtmaßnahmen kann die Durchströmung der Flüssigkeit durch die Wirbelkammer und den Strömungskörper beeinflusst werden.

Der Durchtrittskanal des Strömungskörpers ist insbesondere rotationssymmetrisch ausgebildet.

Bevorzugt erfolgt die Erweiterung des sich im Querschnitt erweiternden Abschnitts des Strömungskörpers und/oder die Verjüngung des sich im Querschnitt verjüngenden Abschnitts des Strömungskörpers entlang einer Geraden oder einer Kurve ohne Wendepunkt oder einer Kurve mit mindestens einem Wendepunkt oder entlang mindestens einer Stufe.

Überraschenderweise hat sich gezeigt, dass bei einer Ausbildung des sich erweiternden Abschnitts des Strömungskörpers, somit der Entspannungskomponente des Strömungskörpers, bei der die Erweiterung des sich erweiternden Abschnitts entlang einer Kurve mit mindestens einem Wendepunkt oder entlang mindestens einer Stufe erfolgt, besonders ausgeprägte, für die hydromechanische Kavitation verantwortliche Schwingungen innerhalb der Flüssigkeit entstehen, die von tiefen Frequenzen über mittlere Frequenzen bis zu hohen Frequenzen reichen. Je nach Ausbildung der Kurve mit dem mindestens einen Wendepunkt, insbesondere der Kurve mit mehreren Wendepunkten, oder der Ausbildung einer oder mehrerer Stufen können unterschiedliche Frequenzbereiche im erweiternden Abschnitt erzeugt werden. Hierdurch kann die Flüssigkeit hocheffizient durch Unterdruck und Kavitation behandelt werden. Insbesondere können die Zellmembranen von Bakterien hocheffizient mechanisch aufgebrochen werden, mit der Konsequenz der Zerstörung der Bakterien.

Es wird davon ausgegangen, dass eine nichtlaminare, sondern turbulente Strömung durch die Ausbildung der Kurve mit dem mindestens einen Wendepunkt oder die mindestens eine Stufe im erweiternden Abschnitt erzeugt wird und dies die hocheffiziente Behandlung der Flüssigkeit ermöglicht.

Weitere Merkmale der Erfindung sind in den Unteransprüchen, der Beschreibung der nachfolgenden Zeichnung und der Zeichnung selbst dargestellt, wobei bemerkt wird, dass alle Einzelmerkmale und alle Kombinationen von Einzelmerkmalen erfindungswesentlich sind.

In der Zeichnung ist die Erfindung anhand mehrerer Ausführungsbeispiele dargestellt, ohne auf diese beschränkt zu sein. Es zeigt:
- Fig. 1: eine räumliche Ansicht einer Einrichtung zum Behandeln von Flüssigkeiten mittels hydromechanischer Kavitation und Unterdruck, wobei bei der Einrichtung zwei Zulauföffnungen zu einer Wirbelkammer und eine Auslauföffnung aus der Wirbelkammer auf derselben Seite der Einrichtung angeordnet sind,
- Fig. 2: einen Mittellängsschnitt durch die in Fig. 1 gezeigte Einrichtung,
- Fig. 3: eine Explosionszeichnung der in den Fig. 1 und 2 gezeigten Einrichtung,
- Fig. 4: eine Ansicht einer weiteren, alternativen Einrichtung zum Behandeln von Flüssigkeiten mittels hydromechanischer Kavitation und Unterdruck, wobei diese Einrichtung vereinfacht dargestellt ist, mit zwei Zulauföffnungen zur Wirbelkammer und drei Auslauföffnungen aus der Wirbelkammer, gemäß der Ansicht IV in Fig. 5,
- Fig. 5: eine Ansicht der Einrichtung gemäß Pfeil V in Fig. 4,
- Fig. 6: einen Schnitt durch die Einrichtung gemäß der Schnittlinie VI-VI in Fig. 4,
- Fig. 7: eine schematische Darstellung einer Anordnung mit Flüssigkeitspumpen und mehreren Einrichtungen zum Behandeln von Flüssigkeiten mittels hydromechanischer Kavitation und Unterdruck,
- Fig. 8: eine modifizierte Gestaltung einer Strömungskörperanordnung, in einer Ansicht VIII gemäß Fig. 9,
- Fig. 9: einen Schnitt durch die Anordnung gemäß der Linie IX-IX in Fig. 8,
- Fig. 10: eine modifizierte Ausbildung eines Strömungskörpers in einer Ansicht X in Fig. 11,
- Fig. 11: einen Schnitt durch den Strömungskörper gemäß der Linie XI-XI in Fig. 10,
- Fig. 12: einen weiteren, modifizierten Strömungskörper in einer Ansicht XII in Fig. 13,
- Fig. 13: einen Schnitt durch den Strömungskörper gemäß der Schnittlinie XIII-XIII in Fig. 12.

### Figurenbeschreibung

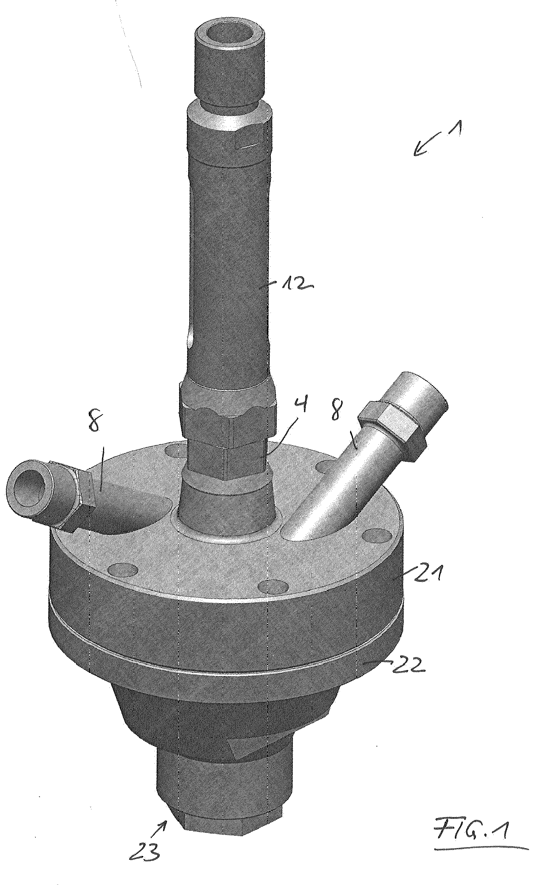

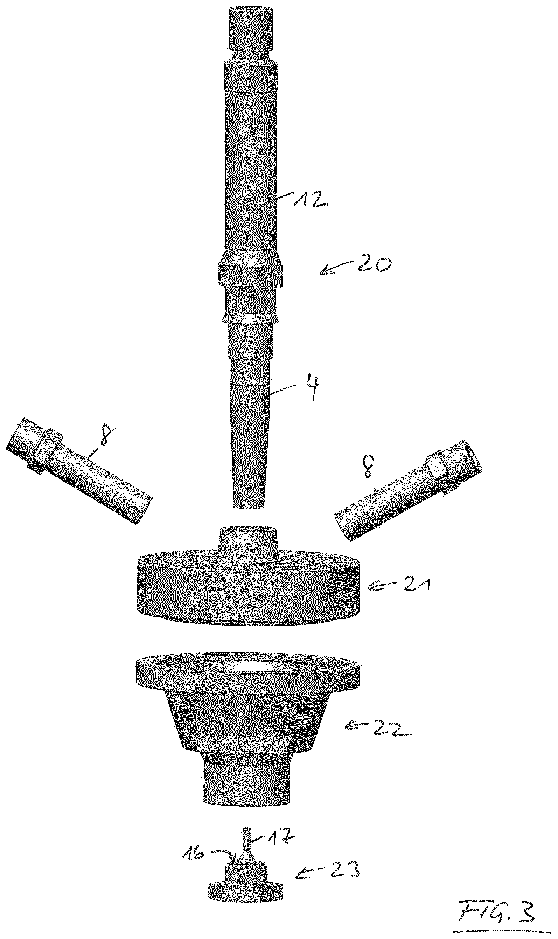

Die Fig. 1 bis 3 zeigen eine Einrichtung 1 zum Behandeln von Wasser, sodass es nahezu keimfrei ist und Trinkwasserqualität erreicht. Die Verteilung des Wassers wird mittels der Einrichtung 1 beseitigt. Durch Unterdruck und Kavitation werden die Zellen der im Wasser befindlichen Bakterien mechanisch aufgeschlossen und zerstört.

Die Einrichtung 1 weist eine Wirbelkammer 2 zum rotierenden Durchleiten der Flüssigkeit und einen sich in Durchströmungsrichtung der Flüssigkeit an die Wirbelkammer 2 anschließenden, einen Durchtrittskanal 3 aufweisenden Strömungskörper 4 zur Erzeugung von Kavitation und Unterdruck auf. Der Strömungskörper 4 weist einen sich in der Durchströmungsrichtung 5 der Flüssigkeit durch den Strömungskörper 4 im Querschnitt verjüngenden Abschnitt 6 und einen sich an diesen Abschnitt 6 anschließenden, im Querschnitt erweiternden Abschnitt 7 auf. Die Engstelle des Strömungskörpers 4 ist mit der Bezugsziffer 30 bezeichnet.

Die Wirbelkammer 2 weist zwei Einlassstutzen 8 auf, wobei der jeweilige Einlassstutzen 8 im Bereich einer Zulauföffnung 9 in einen im Inneren der Wirbelkammer 2 angeordneten Reaktorraum 10 mündet. Mit der Wirbelkammer 2 ist der Strömungskörper 4 verbunden. Der Strömungskörper 4 ist innerhalb der Wirbelkammer 2 angeordnet und von dem Reaktorraum 10 umschlossen. Der Strömungskörper 4 weist innerhalb der Wirbelkammer 2 eine Einlassöffnung 11 auf. Diese dient dem Durchleiten der rotierenden Flüssigkeit von dem Reaktorraum 10 durch diese Einlassöffnung in den Durchtrittskanal 3 des Strömungskörpers 4 und aus dieser heraus im Bereich eines an den Strömungskörper 4 anschließenden Rohransatzstutzens 12.

Der Reaktorraum 10 und der Strömungskörper 4 sind rotationssymmetrisch ausgebildet. Deren Rotationsachse ist identisch und entspricht einer Mittellängsachse 13 der Einrichtung 1. Der Reaktorraum 10 ist im Wesentlichen kegelstumpfförmig ausgebildet mit Verjüngungsrichtung des Reaktorraums 10 von seinem dem Einlassstutzen 8 zugewandten Ende zur Einlassöffnung 11 des Strömungskörpers 4. Die beiden Zulauföffnungen 9 zur Wirbelkammer 2 und eine Auslassöffnung 14 des Strömungskörpers 4 sind auf derselben Seite 15 der Wirbelkammer 2 angeordnet. Die beiden Einlassstutzen 8 sind bezüglich des Reaktorraums 10 außermittig und schräg angeordnet, zum unmittelbaren tangentialen Einleiten der Flüssigkeit in den Reaktorraum 10. Bereits im Einleitungsbereich der Flüssigkeit in den Reaktorraum 10 rotiert die Flüssigkeit somit um den Strömungskörper 4. Aufgrund des sich verjüngenden Querschnitts von diesem Einleitungsbereich zur Einlassöffnung 11 des Strömungskörpers 4 hin erhöht sich die Rotationsgeschwindigkeit der Flüssigkeit zur Einlassöffnung 11 hin, und beträgt in diesem Ausgangsbereich der Wirbelkammer 2 durchaus mehr als 30 m/s. Die beiden Zulauföffnungen 9 sind auf demselben Kreis um die Mittellängsachse 13 angeordnet und jeweils um 180° zueinander versetzt angeordnet, bei identischer schräger Positionierung der beiden Einlassstutzen 8.

Die Wirbelkammer 2 weist im Bereich des die Einlassöffnung 11 aufweisenden Endes des Strömungskörpers 4 einen Vorsprung 16 zum Umleiten der im Reaktorraum 10 rotierenden Flüssigkeit in den Strömungskörper 4 auf. Dieser Vorsprung 16 ist rotationssymmetrisch ausgebildet, wobei dessen Rotationsachse der Mittellängsachse 13 entspricht. Der Vorsprung 16 ragt im Bereich eines Zapfenabschnitts 17 des Vorsprungs 16 in den Strömungskörper 4, in diesen Endbereich des Strömungskörpers 4, bei Ausbildung einer Ringöffnung 18 zwischen dem Zapfenabschnitt 17 und dem Strömungskörper 4 in dessen sich im Querschnitt verjüngenden Abschnitt 6. Ein Luftkanal 19 durchsetzt den Vorsprung 16. Der Luftkanal 19 mündet in den Durchtrittskanal 3 des Strömungskörpers 4.

Die Einlassöffnung 11 des Strömungskörpers 4 ist in einem im Querschnitt reduzierten Bereich des Reaktorraums 10 angeordnet. Die Einlassöffnung 11 ist hierbei senkrecht zu der Mittellängsachse 13 des Reaktorraums 11 und des Strömungskörpers 4 sowie dem Luftkanal 19 angeordnet.

Die Einrichtung 1 als solche weist als wesentliche Bestandteile eine Auslaufeinheit 20, die durch den Strömungskörpers 4 und das Rohransatzstück 12 gebildet ist, die beiden Einlassstutzen 8 für die tangentiale Zuführung der Flüssigkeit, einen Einspritztopf 21 in seiner Funktion als Reaktoroberteil, einen Bodentopf 22 in der Funktion des Reaktorunterteils sowie ein Einsatzteil 23 mit dem Vorsprung 16 nebst Zapfenabschnitt 17 und Luftkanal 18 auf. Dieses Einsatzteil 23 hat nicht nur die Funktion, die Strömung umzulenken, sondern wirkt in seiner Eigenschaft als Luft-Sauerstoff-Ansaugdüse auch als Venturi-Düse.

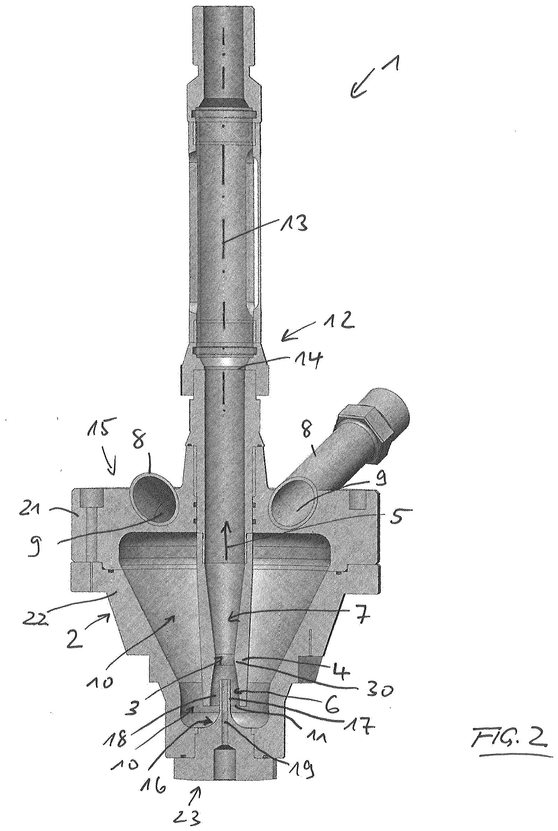

Das Funktionsprinzip bzw. die Führung der Flüssigkeit/des Wassers innerhalb des Reaktors geschieht wie folgt:
Die Flüssigkeit wird mittels einer Hochdruck-Kreiselpumpe mit einem Vordruck von beispielsweise 8.0 bar in den Reaktorraum 10 geführt. Druckseitig der Pumpe ist ein Y-Stück angebracht, das den Flüssigkeits-Volumenstrom auf zwei Druckschläuche verteilt zu den beiden Einlassstutzen 8 führt. Über die tangential am Einspritztopf 21 angebrachten Einlassstutzen 8 wird der Flüssigkeits-Volumenstrom beim Eintritt in den Reaktorraum 10 in eine hohe Rotationsgeschwindigkeit versetzt. Der Volumenstrom rotiert, auf die Orientierung gemäß der Fig. 2 bezogen, von oben nach unten, aufgrund der kegelförmigen Innenkontur des Reaktorraums 10 im unteren Reaktorbereich mit immer höherer Rotationsgeschwindigkeit aufgrund des Zyklon-Prinzips. Die Rotationsgeschwindigkeit im Umlenkbereich, somit im Bereich des Vorsprungs 16 beträgt hierbei ca. 30 m/s. Der Volumenstrom wird am Boden des Reaktors zwangsumgelenkt, nach oben geführt und von dem Strömungskörper 4, der im konkreten Ausführungsbeispiel als Laval-Düse ausgebildet ist, aufgenommen. Beim Durchströmen der Laval-Düse wirkt diese als Diffusor, das heißt, der Volumenstrom erfährt nach Austritt aus dem Laval-Düsenbereich eine plötzliche Entspannung. Der Auslaufdruck nach der Laval-Düse beträgt nur noch maximal +1.0 bar. Innerhalb der Laval-Düse entsteht Unterdruck von bis zu -1.0 bar. Über die Venturi-Düse kann nun Luft-Sauerstoff aus der Umgebungsluft angesaugt werden. Innerhalb der Laval-Düse entsteht gleichzeitig die hydromechanische Kavitation, ausgelöst durch die plötzliche Entspannung. Unterdruck und Kavitation zerstören Bakterien, indem die Zellmembranen der Bakterien mechanisch aufgebrochen werden. Durch den angesaugten Luft-Sauerstoff erfolgt die sogenannte Kalt-Oxidation der nun vorliegenden Zell-Fragmente und beim Kavitationsprozess entstehen hochwirksame Hydroxyl-Radikale, die ebenfalls als Oxidationskomponente zur Verfügung stehen.

Die Ausbildung der Einrichtung 1 aus den beschriebenen einzelnen Teilen ermöglicht es ohne Weiteres, den Strömungskörper 4 in dessen Achsrichtung bezüglich der Wirbelkammer 2 und/oder den Vorsprung 16 in dessen Achsrichtung bezüglich der Wirbelkammer 2 zu verstellen. Hierdurch lässt sich das Strömungsverhalten im Reaktorraum 10 und in dem Strömungskörper 4 unter dem Aspekt der Optimierung der Behandlung der Flüssigkeit mittels hydromechanischer Kavitation und Unterdruck optimieren.

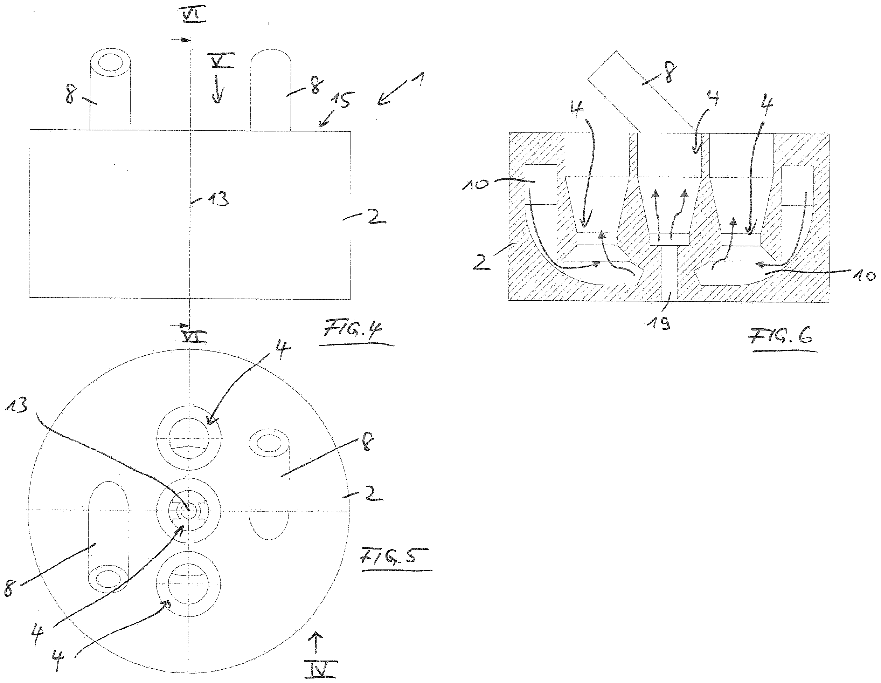

Der Aufbau der Einrichtung 1 gemäß dem Ausführungsbeispiel nach den Fig. 4 bis 6 unterscheidet sich grundsätzlich von dem zuvor beschriebenen Ausführungsbeispiel dadurch, dass der Reaktorraum 10 drei Abströmbereiche für die Flüssigkeit aufweist und jedem Abströmbereich ein Strömungskörper 4 zugeordnet ist, der entsprechend dem zuvor beschriebenen Strömungskörper ausgebildet ist.

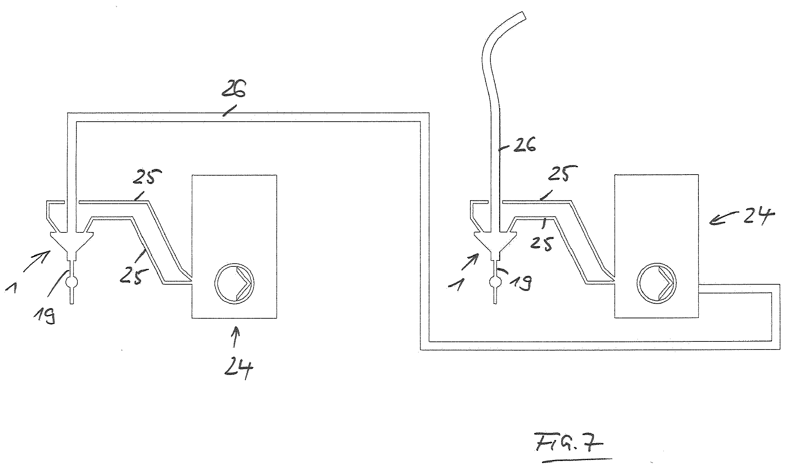

Fig. 7 veranschaulicht, dass mehrere Einrichtungen 1 in Reihe angeordnet sein können. So sind mehrere Einrichtungen 1 entsprechend dem in den Fig. 1 bis 3 veranschaulichten Ausführungsbeispiel ausgeführt. Über eine erste Pumpe 24, die als Hochdruck-Kreiselpumpe ausgebildet ist, wird Flüssigkeit mit einem Vordruck von 8.0 bar über zwei Leitungen 25 den beiden Einlassstutzen 8 der Einrichtung 1 zugeleitet. Die behandelte Flüssigkeit wird mittels einer Leitung 26, die mit dem Rohransatzstück 12 verbunden ist, aus der Einrichtung 1 abgeführt und einer weiteren Pumpe 24 zugeführt. Diese fördert die Flüssigkeit unter dem Vordruck von 8.0 bar durch die beiden Leitungen 25 zur nächstfolgenden Einrichtung 1, von der die dann weiter behandelte Flüssigkeit durch die Leitung 26 abgeführt wird, zu einer weiteren Pumpe 24 oder aber unmittelbar zu einem Verbraucher zwecks Nutzung der Flüssigkeit.

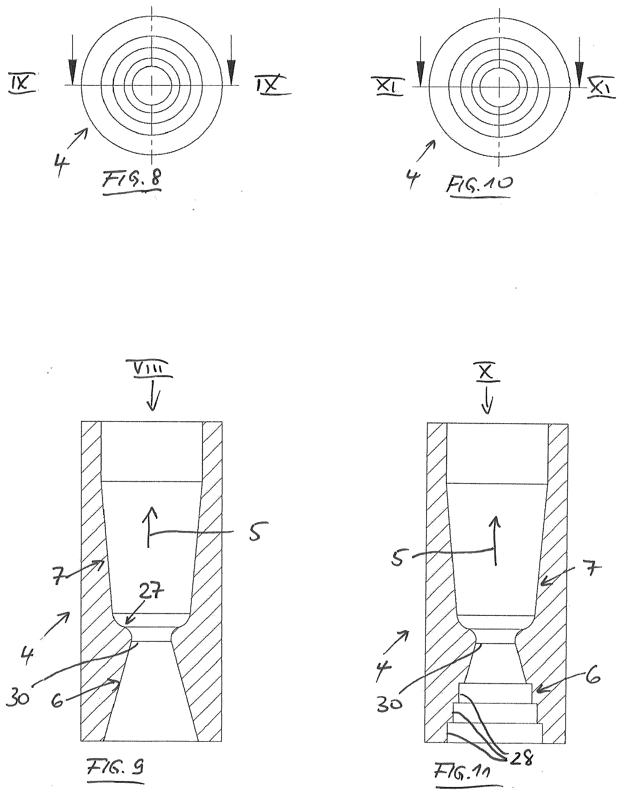

Die Fig. 8 und 9 veranschaulichen einen Strömungskörper 4, der gegenüber dem Strömungskörper 4 des Ausführungsbeispiels nach den Fig. 1 bis 3 modifiziert ist. Der Strömungskörper 4 ist nicht als Laval-Düse ausgebildet. Der sich im Querschnitt verjüngende Bereich 6 verjüngt sich zwar stetig, allerdings ist der sich im Querschnitt erweiternde Bereich 7 derart ausgeführt, dass die Erweiterung dieses Abschnitts 7 entlang einer Kurve 27 mit mindestens einem Wendepunkt erfolgt. Bei einer derartigen Ausbildung des sich erweiternden Abschnitts 7 des Strömungskörpers 4, somit der Entspannungskomponente des Strömungskörpers 4, entstehen besonders ausgeprägte, für die hydromechanische Kavitation verantwortliche Schwingungen innerhalb der Flüssigkeit, die von tiefen Frequenzen über mittlere Frequenzen bis zu hohen Frequenzen reichen. Je nach Ausbildung der Kurve 27 mit dem mindestens einen Wendepunkt kann die Flüssigkeit sehr effizient durch Unterdruck und Kavitation optimal behandelt werden.

Das Ausführungsbeispiel nach den Fig. 10 und 11 unterscheidet sich von demjenigen nach den Fig. 8 und 9 dadurch, dass der Strömungskörper auch in seinem im Querschnitt verjüngenden Bereich 6 gegenüber dem entsprechenden Bereich einer Laval-Düse modifiziert ist. Dieser sich im Querschnitt verjüngende Bereich 6 weist drei Stufen 28 auf. Damit verjüngt sich der Querschnitt des Abschnitts 6 in drei Stufen. An die dritte Stufe 28 schließt sich ein sich konisch verjüngender Teilbereich des Abschnitts 6 an. Die Stufen haben dieselbe Stufenhöhe, in Durchströmungsrichtung 5 des Strömungskörpers 4 gesehen und auch denselben Stufensprung, in radialer Richtung des Strömungskörpers 4 gesehen. Es werden hierdurch durch die drei Stufen 28 drei Kreiszylinder im Inneren des Strömungskörpers 4 gebildet, wobei der größte Kreiszylinder oberstromig angeordnet ist, der mittelgroße Kreiszylinder in der Mitte angeordnet ist und der kleinste Kreiszylinder unterstromig angeordnet ist.

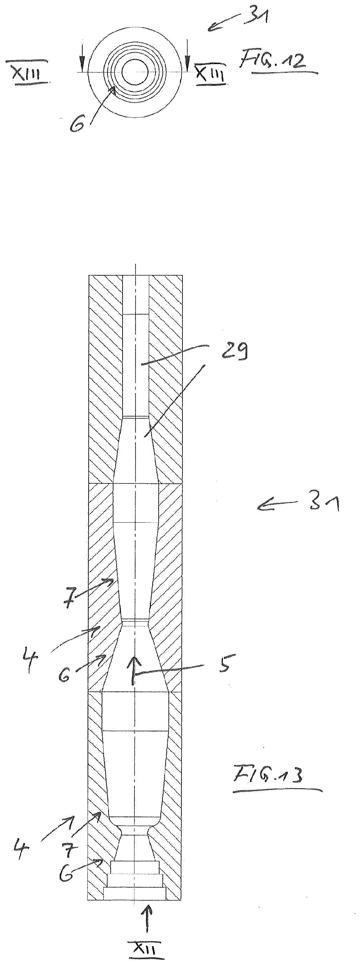

Das Ausführungsbeispiel nach den Fig. 12 und 13 veranschaulicht, dass zwei unterschiedlich gestaltete Strömungskörper 4, 4 in einer Baueinheit 31 hintereinander angeordnet sein können, wobei der Auslaufbereich des einen Strömungskörpers 4 unmittelbar in den Einlaufbereich des folgenden Strömungskörpers 4 übergeht. An diesen folgenden Strömungskörper 4 schließt sich ein Kanalabschnitt 29 mit sich zunächst verjüngendem Querschnitt, dann konstantem Querschnitt an, zum Erhöhen der Fließgeschwindigkeit der Flüssigkeit und anschließendem Ableiten der Flüssigkeit bei konstantem Druck und konstanter Fließgeschwindigkeit.

### Bezugszeichenliste

- 1: Einrichtung
- 2: Wirbelkammer
- 3: Durchtrittskanal
- 4: Strömungskörper
- 5: Durchströmungsrichtung
- 6: im Querschnitt verjüngender Bereich
- 7: im Querschnitt erweiternder Bereich
- 8: Einlassstutzen
- 9: Zulauföffnung
- 10: Reaktorraum
- 11: Einlassöffnung
- 12: Rohransatzstück
- 13: Mittellängsachse
- 14: Auslauföffnung
- 15: Seite
- 16: Vorsprung
- 17: Zapfenabschnitt
- 18: Ringöffnung
- 19: Luftkanal
- 20: Auslaufeinheit
- 21: Einspritztopf
- 22: Bodentopf
- 23: Einsatzteil
- 24: Pumpe
- 25: Leitung
- 26: Leitung
- 27: Kurve
- 28: Stufe
- 29: Kanalabschnitt
- 30: Engstelle
- 31: Baueinheit

## Patentansprüche

1. Einrichtung (1) zum Behandeln von Flüssigkeiten mittels hydromechanischer Kavitation und Unterdruck, wobei die Einrichtung (1) eine Wirbelkammer (2) zum rotierenden Durchleiten der in einem Zulauf der Wirbelkammer (2) unter Druck stehenden Flüssigkeit und einen sich in Durchströmungsrichtung (5) der Flüssigkeit an die Wirbelkammer (2) anschließenden, einen Durchtrittskanal (3) aufweisenden Strömungskörper (4) zur Erzeugung von Kavitation und Unterdruck aufweist, wobei der Strömungskörper (4) einen sich in der Durchströmungsrichtung (5) der Flüssigkeit durch den Strömungskörper (4) im Querschnitt verjüngenden Abschnitt (6) und einen sich an diesen Abschnitt (6) anschließenden, im Querschnitt erweiternden Abschnitt (7) aufweist, **dadurch gekennzeichnet, dass** die Wirbelkammer (2) im Inneren einen Reaktorraum (10) zur Aufnahme der rotierenden Flüssigkeit aufweist, sowie mit der Wirbelkammer (2) der Strömungskörper (4) verbunden ist, der innerhalb der Wirbelkammer (2) angeordnet und von dem Reaktorraum (10) umschlossen ist, wobei die Wirbelkammer (2) eine Zulauföffnung (9) zum Zuführen der Flüssigkeit in den Reaktorraum (10) und der Strömungskörper (4) innerhalb der Wirbelkammer (2) eine Einlassöffnung (11) aufweist, zum Durchleiten der rotierenden Flüssigkeit von dem Reaktorraum (10) durch diese Einlassöffnung (11) in den Durchtrittskanal (3) des Strömungskörpers (4) und aus der Wirbelkammer (2) heraus.

2. Einrichtung nach Anspruch 1, **dadurch gekennzeichnet, dass** der Reaktorraum (10) und/oder der Durchtrittskanal (3) des Strömungskörpers (4) rotationssymmetrisch ausgebildet ist.

3. Einrichtung nach Anspruch 1 oder 2, **dadurch gekennzeichnet, dass** die Zulauföffnung (9) zur Wirbelkammer (2) und eine Auslassöffnung (14) des Strömungskörpers (4) auf derselben Seite (15) der Wirbelkammer (2) oder auf aneinander angrenzenden Seiten der Wirbelkammer (2) angeordnet ist.

4. Einrichtung nach einem der Ansprüche 1 bis 3, **dadurch gekennzeichnet, dass** die Wirbelkammer (2) ein oder mehrere Zulauföffnungen (9) aufweist und ein oder mehrere Strömungskörper (4) innerhalb des Reaktorraums (10) angeordnet sind.

5. Einrichtung nach einem der Ansprüche 1 bis 4, **dadurch gekennzeichnet, dass** der Reaktorraum (10) sich von der Zulauföffnung (9) zur Wirbelkammer (2) zur Einlassöffnung (11) des Strömungskörpers (4) im Querschnitt verjüngt, insbesondere stetig verjüngt, bezogen auf eine Ebene des Querschnitts senkrecht zu einer zentralen Achse (13) des Reaktorraums (10) und/oder eine zentrale Achse (10) des Strömungskörpers (4).

6. Einrichtung nach einem der Ansprüche 1 bis 5, **dadurch gekennzeichnet, dass** die Wirbelkammer (2) einen Einlassstutzen (8) oder Einlasskanal mit der Zulauföffnung (9) aufweist, wobei der Einlassstutzen (8) oder Einlasskanal bezüglich des Reaktorraums (10) außermittig und schräg angeordnet ist, zum unmittelbaren tangentialen Einleiten der Flüssigkeit in den Reaktorraum (10).

7. Einrichtung nach Anspruch 6, **dadurch gekennzeichnet, dass** die Wirbelkammer (2) mehrere um identische Teilkreiswinkel zueinander versetzt und identisch schräg angeordnete Einlassstutzen (8) oder Einlasskanäle aufweist.

8. Einrichtung nach einem der Ansprüche 1 bis 7, **dadurch gekennzeichnet, dass** die Wirbelkammer (2) im Bereich des die Einlassöffnung (11) aufweisenden Endes des Strömungskörpers (4) einen Vorsprung (16) zum Umlenken der im Reaktorraum (10) rotierenden Flüssigkeit in den Strömungskörper (4) aufweist, insbesondere einen rotationssymmetrisch ausgebildeten Vorsprung (16) aufweist.

9. Einrichtung nach Anspruch 8, **dadurch gekennzeichnet, dass** der Vorsprung (16) in den Strömungskörper (4) in diesem Endbereich des Strömungskörpers (4) ragt, bei Ausbildung einer Ringöffnung (18) zwischen dem Vorsprung (16) und dem Strömungskörper (4), insbesondere zwischen dem Vorsprung (16) und dem sich im Querschnitt verjüngenden Abschnitt (6) des Strömungskörpers (4).

10. Einrichtung nach Anspruch 8 oder 9, **dadurch gekennzeichnet, dass** ein Luftkanal (19) den Vorsprung (16) durchsetzt, wobei der Luftkanal (19) in den Reaktorraum (10) oder den Durchtrittskanal (3) des Strömungskörpers (4) mündet.

11. Einrichtung nach einem der Ansprüche 1 bis 10, **dadurch gekennzeichnet, dass** die Einlassöffnung (11) des Strömungskörpers (4) in einem im Querschnitt reduzierten Bereich des Reaktorraums (10) angeordnet ist.

12. Einrichtung nach einem der Ansprüche 1 bis 11, **dadurch gekennzeichnet, dass** die Einlassöffnung (11) des Strömungskörpers (4) senkrecht zu einer zentralen Achse (13) des Reaktorraums (10) und/oder einer Rotationsachse (13) der Flüssigkeit im Reaktorraum (10) und/oder einer zentralen Achse (13) des Strömungskörpers (4) und/oder einer zentralen Achse (13) des Vorsprungs (16) angeordnet ist.

13. Einrichtung nach einem der Ansprüche 1 bis 12, **dadurch gekennzeichnet, dass** eine zentrale Achse (13) des Reaktorraums (10) und/oder eine Rotationsachse (13) der Flüssigkeit im Reaktorraum (10) und/oder eine zentrale Achse (13) des Strömungskörpers (4) und/oder eine zentrale Achse (13) des Vorsprungs (16) identisch sind.

14. Einrichtung nach einem der Ansprüche 1 bis 13, **dadurch gekennzeichnet, dass** der Strömungskörper (4) in dessen Achsrichtung bezüglich der Wirbelkammer (2) und/oder der Vorsprung (16) in dessen Achsrichtung bezüglich der Wirbelkammer (2) verstellbar ist.

15. Einrichtung nach einem der Ansprüche 1 bis 14, **dadurch gekennzeichnet, dass** die Erweiterung des sich im Querschnitt erweiternden Bereichs (7) und/oder die Verjüngung des sich im Querschnitt verjüngenden Abschnitts (6) entlang einer Geraden oder einer Kurve ohne Wendepunkt oder einer Kurve (27) mit mindestens einem Wendepunkt oder entlang mindestens einer Stufe (28) erfolgt.
